# EUROPÄISCHE PATENTSCHRIFT

(11) **EP 0 519 034 B1**
(45) Veröffentlichungstag und Bekanntmachung des Hinweises auf die Patenterteilung: **01.05.1996**
(21) Anmeldenummer: 92901753.1
(22) Anmeldetag: 07.01.1992
(51) Int. Cl.: H02P 1/26, H02P 3/18, H02P 1/38

(54) **SCHALTUNGSANORDNUNG ZUR BEEINFLUSSUNG DES ANLAUF- UND/ODER BREMSVERHALTENS VON DREHSTROM-ASYNCHRONMASCHINEN**
CIRCUIT FOR INFLUENCING THE START-UP AND/OR BRAKING BEHAVIOUR OF THREE-PHASE ASYNCHRONOUS MOTORS
CIRCUIT SERVANT A INFLUER SUR LE COMPORTEMENT AU DEMARRAGE ET/OU AU FREINAGE DE MOTEURS ASYNCHRONES TRIPHASES

(30) Priorität: 08.01.1991 AT 23/91
(43) Veröffentlichungstag der Anmeldung: 23.12.1992
(73) Patentinhaber: OBERMAIR, Herbert, A-4501 Neuhofen/Krems (AT)
(72) Erfinder: OBERMAIR, Herbert, A-4501 Neuhofen/Krems (AT)
(74) Vertreter: Hübscher, Heiner, Dipl.-Ing.
(86) Internationale Anmeldenummer: AT9200001
(87) Internationale Veröffentlichungsnummer: WO9212570

(56) Entgegenhaltungen:
- DE-A- 3 631 298
- DE-C- 692 297
- DE-C- 3 832 149
- PATENT ABSTRACTS OF JAPAN vol. 8, no. 119 (E-248)(1556) 5. Juni 1984& JP-A 59 032 372

## Beschreibung

Die Erfindung bezieht sich auf eine Schaltungsanordnung zur Beeinflussung des Anlauf und/oder Bremsverhaltens von Drehstrom-Asynchronmaschinen, deren Phasenwicklungen nach einer ersten Ausführungsform für den Dauerbetrieb in Sternschaltung geschaltet sind und Anschlüsse für die Phasenleiter und einen Nulleiter aufweisen bzw. nach einer zweiten Ausführungsform Anschlüsse für die Phasenleiter und einen Nullleiter aufweisen.

Insbesondere betrifft die Erfindung Schaltungsanordnungen für Getriebe-Bremsmotoren für Maschinen, Fertigungsanlagen, Förderanlagen und Hebezeuge. Hier werden häufig auch polumschaltbare Motoren verwendet. Für Asynchronmaschinen sind verschiedene Drosselschaltungen mit vorgeschalteten Elementen zur Beeinflussung des Anlauf- und/oder Bremsverhaltens bekannt, wobei in Sonderfällen beim gleichen Motor verschiedene Drosselschaltungen für den Anlauf- bzw. Bremsbetrieb eingesetzt werden. Schaltungsanordnungen der gegenständlichen Art sind notwendig, um ruckartige Beschleunigungen bzw. Verzögerungen der angetriebenen Teile und Schläge im Antriebsstrang zu vermeiden, die unter anderem bei im Antriebsstrang vorhandenem Spiel auftreten können, wenn der Antriebsstrang für die Bremsung bzw. den Antrieb gespannt wird. Neben Drosselschaltungen für die Phasenwicklungen, die z. B. zu- und abschaltbare Widerstände aufweisen, sind auch Drossel- und Regelschaltungen für Asynchronmaschinen mit einer Läuferwicklung bekannt, die über Schleifringe mit einer Steuerschaltung verbunden werden kann. Eine derartige Ausgestaltung ist gegenüber Maschinen mit Kurzschlußläufer aufwendig. Zur Erzielung günstiger dynamischer Kennlinien beim Anlauf- bzw. Bremsbetrieb werden häufig zusätzliche Schwungmassen, z. B Lüfter mit hoher Eigenmasse, eingesetzt, die aber andere Nachteile, insbesondere eine verschlechterte Beschleunigung und Verzögerung des Antriebsstranges bedingen.

Aufgabe der Erfindung ist die Vermeidung der aufgezeigten Nachteile und die Schaffung von Schaltungsanordnungen für die beiden eingangs genannten Ausführungsformen, die mit einfachen Mitteln eine wirksame Beeinflussung des Anlauf- bzw. Bremsverhaltens ermöglichen.

Aus DE-C-692297 ist ein Anlaßverfahren für Drehstromkurzschlußläufermotoren bekannt, wobei die in Dreieck geschaltete Motorwicklung mittels eines Umschalters zuerst an den Nulleiter und zwei Phasenleiter und dann an die drei Phasenleiter des Netzes angeschlossen wird.

Die Erfindung löst die gestellte Aufgabe bei der ersten Ausführungsform bzw. bei der zweiten Ausführungsform, wie im Anspruch 1 bzw. Anspruch 2 angegeben ist.

Beide Ausführungsformen sind insbesondere für Maschinen mit Kurzschlußläufer bestimmt. Trotz des Anschlusses an nur zwei bzw. nur einen Phasenleiter wird infolge der gegenseitigen Beeinflussung der Wicklungsstränge und der Beeinflussung über den Läuder ein Drehfeld erzeugt, das gegenüber dem Normalbetrieb ein verringertes Anlaufmoment bzw. bei der Übersynchronbremsung ein verringertes Bremsmoment bedingt. Bei der ersten Ausführungsform kommt es zu einer Phasenverschiebung der Spannungen in den beiden an den Phasenleitern liegenden Wicklungssträngen, wogegen die Spannung im dritten Wicklungsstrang keine Phasenverschiebung aufweist, jedoch erheblich verringert ist. Berechnungen zeigen, daß sich die Spannungen in den beiden an Phase liegenden Wicklungssträngen in der Größe von 88,2 % der Spannungen bei normaler Sternschaltung und in der dritten Phase auf 33,3 % der normalen Phasenspannung einstellen. Zu Beginn des Anlaufvorganges verhalten sich die Ströme in den einzelnen Strängen ähnlich. Es wird dadurch kein kreisförmiges, sondern ein elliptisches Drehfeld erzeugt und es ergibt sich ein Drehmomentverlauf, der über den gesamten Drehzahlbereich einem Drittel des Drehmomentes bei normaler Sternschaltung entspricht.

Im übersynchronen Betrieb bei polumschaltbaren Motoren ergibt sich eine zusätzliche Möglichkeit zur weiteren Drehmomentverringerung dadurch, daß über den Umschalter wahlweise die Phasenanschlüsse von einer oder zwei der drei am Sternpunkt verbundenen Phasenwicklungen an den Nulleiter angeschaltet werden. Wird nur eine Phasenwicklung mit dem Nulleiter verbunden, der Phasenanschluß des zweiten Wicklungsstranges aber unterbrochen, so kommt es zu einer zusätzlichen Reduzierung des Drehmomentes.

Bei der eingangs erwähnten zweiten Ausführungsform ergibt sich, da die eine Phasenwicklung bleibend an den zugeordneten Phasenleiter und den Nulleiter geschaltet ist und daher an der vollen Phasenspannung bleibt, bei der Verbindung der einen anderen Phasenwicklung mit dem Nulleiter ein höheres Drehmoment als bei der entsprechenden Schaltstufe der bleibend in Sternschaltung verbunden Phasenwicklungen der ersten Ausführungsform.

Alle Schaltungsvarianten können immer noch ohne Zu- oder Abschaltung äußerer Regelglieder, wie Vorwiderstände, Impedanzen u. dgl. arbeiten.

Der bauliche Aufwand aller dieser Schaltungen ist gering, weil in den meisten Fällen zwei Stranganspeisungen gegenüber dem normalen Sternbetrieb unverändert bleiben können.

Zur Vermeidung von ruckartigen Beschleunigungen bzw. Verzögerungen und des Auftretens von Schlägen nach Ausgleich des in einem Antriebsstrang zwischen Getriebemotor und Last vorhandenen Übertragungsspieles genügt es in den meisten Fällen, die erfindungsgemäße Anlaufschaltung nur kurzzeitig einzusetzen. Um bei Anlagen mit mehreren Motoren, insbesondere Getriebemotoren eine Optimierung zu erzielen, kann der Umschalter als Teil einer Steueranlage für mehrere Antriebsmotoren einer Förderanlage oder eines Hebezeuges ausgebildet und über eine Fernsteuereinrichtung betätigbar sein, wobei die Fernsteuereinrichtung den Umschalter für den Anlauf des zugehörigen, vorzugsweise als Getriebemotor ausgebildeten Motors, nur in in der Größenordnung von Sekundenbruchteilen liegenden Zeitspannen in dem der Anlaufschaltung entsprechenden Schaltzustand hält und dann den normalen Einschalzustand unter Anschaltung sämtlicher Phasenwicklungen an die Phasenanschlüsse einsteuert. Für normale Getriebemotoren kann die Anlaufschaltung beispielsweise für 0,2 Sekunden aufrechterhalten werden. Ein besonderer Vorteil der zunächst erwähnten, einfachsten Schaltung besteht darin, daß die Phasenlage der Spannung in der wahlweise an den Nullleiter anschaltbaren Phasenwicklung den gleichen Richtungsvektor wie die Phasenspannung aufweist, so daß hier beim Umschalten keine Störungen zu befürchten sind. Bei polumschaltbaren Motoren empfiehlt es sich, während des gesamten übersynchronen Bremsbetriebes die jeweils gewählte Bremsschaltung beizubehalten.

Nach einer anderen Ausgestaltung ist bei einer polumschaltbaren Asynchronmaschine der Umschalter für den Bremsbetrieb gemeinsam mit einem Polschalter für die Änderung der Polzahl betätigbar, so daß er eine Nulleiterverbindung der wenigstens einen Phasenwicklung bei einer Erhöhung der Polzahl beim Bremsbetrieb herstellt und dadurch die sonst durch die Erhöhung der Polzahl auftretende sprunghafte Erhöhung der Bremsverzögerung herabsetzt.

Weitere Einzelheiten und vorteilhafte Ausgestaltungen der Erfindung entnimmt man der nachfolgenden Zeichnungsbeschreibung.

In der Zeichnung ist der Erfindungsgegenstand beispielsweise veranschaulicht. Es zeigen
- Fig. 1: in vereinfachter Darstellungsweise eine erfindungsgemäße Schaltungsanordnung, wobei nur die Schaltung der Phasenwicklungen einer Drehstrom-Asynchronmaschine mit Kurzschlußläufer gezeigt wurde,
- Fig. 2: eine Vektordarstellung der Phasenspannungen für die Schaltung nach Fig. 1, wobei die Vektoren für den normalen Betriebszustand in dünnen und die Vektoren für den Betriebszustand der Anlaufschaltung in dicken Linien dargestellt wurden,
- Fig. 3: in einer der Fig. 1 entsprechenden Darstellungsweise eine weitere erfindungsgemäße Schaltungsanordnung und
- Fig. 4: eine dritte Schaltungsanordnung.

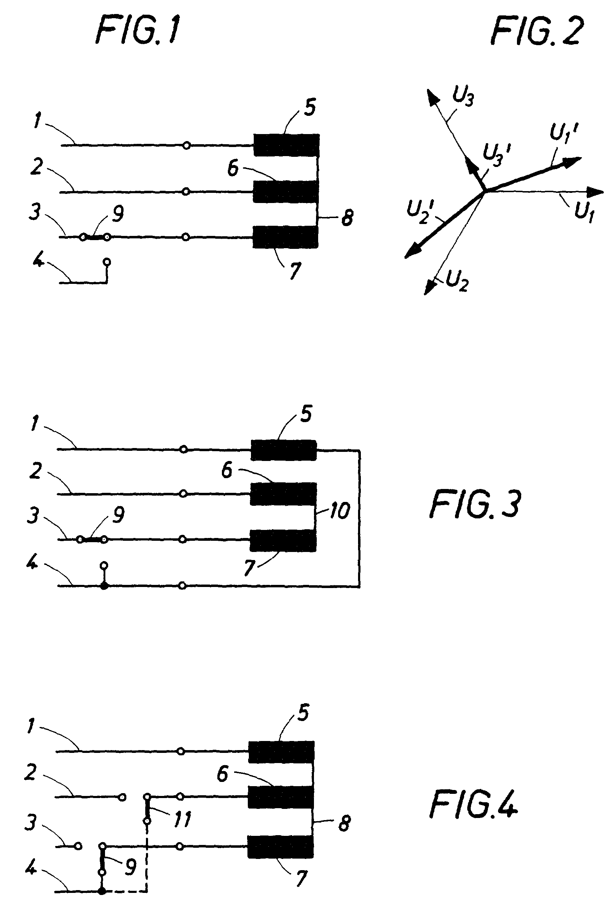

In den Fig. 1, 3 und 4 der Zeichnung wurden die Phasenleiter durchgehend mit 1, 2, 3, der Nulleiter mit 4 und die drei Phasenhauptwicklungen eines Drehstrom-Asynchronmotors mit Kurzschlußläufer mit 5, 6 und 7 bezeichnet. Es wird vorausgesetzt, daß in jedem Fall für den Motor ein den dargestellten Phasenleitern 1, 2, 3 bzw. dem Nulleiter 4 vorgeordneter Hauptschalter vorhanden ist, wobei dieser Hauptschalter, gegebenenfalls gemeinsam mit dem bzw. den noch zu beschreibenden Umschaltern der erfindungsgemäßen Schaltungsanordnungen über eine Fernsteuereinrichtung betätigt werden kann, wenn der Motor z. B. als Getriebemotor ausgebildet und Teil einer Antriebseinrichtung in einer Förderanlage, einem Hebezeug od. dgl. ist.

Bei der Ausführung nach Fig. 1 sind die drei Phasenwicklungen 5, 6, 7 über Leitungsverbindungen 8 am Sternpunkt untereinander verbunden, so daß an ihnen bei geschlossenem Hauptschalter die untereinander gleiche Vektorgröße aufweisenden Phasenspannungen U₁, U₂, U₃ anliegen. Ein beim Ausführungsbeispiel im Phasenleiter 3 vorgesehener Umschalter 9 ermöglicht es, die Phasenwicklung 7 vom Phasenleiter 3 auf den Nulleiter 4 umzuschalten. Dadurch treten Phasenspannungen U₁', U₂', U₃' auf, wobei U₃' in Phase mit U₃ liegt, während bezüglich U₁' und U₂' eine Phasenverschiebung von 19,1° auftritt, wie dies der Fig. 2 entnommen werden kann.

Bei der Schaltung nach Fig. 3 ist der Sternpunkt aufgetrennt und es sind nur die beiden Phasenwicklungen 6 und 7 durch eine Leitung 10 verbunden. Die Phasenwicklung 5 liegt mit einem Ende am Phasenleiter 1 und mit dem anderen Ende am Nulleiter 4. Durch Betätigung eines Umschalters 9 kann die Phasenwicklung 7 statt mit dem Phasenleiter 3 ebenfalls mit dem Nulleiter 4 verbunden werden, um das Anlauf- bzw. Verzögerungsmoment der Maschine zu verringern.

Die Schaltung nach Fig. 4 entspricht grundsätzlich der Schaltung nach Fig. 1. Zusätzlich zu dem Umschalter 9 nach Fig. 1 ist aber ein weiterer Umschalter 11 vorhanden, der entweder gemeinsam mit dem Schalter 9 oder auch unabhängig von diesem betätigt werden kann. Befindet sich nur einer der beiden Schalter 9, 11 in der in Fig. 4 gezeigten Schaltstellung, dann herrschen sinngemäß gleiche Verhältnisse wie bei der Schaltung nach Fig. 1 im Falle der Verbindung von 4 mit 7. Wird auch der zweite Schalter in die Stellung nach Fig. 4 verstellt, dann liegen die beiden Phasenwicklungen 6 und 7 statt an den Phasen 2, 3 am Nulleiter 4 und die Parallelschaltung dieser Phasenwicklungen 6, 7 ist über die Sternverbindung 8 in Serie an die Phasenwicklung 5 geschaltet, die ihrerseits am Phasenleiter 1 liegt. In dieser Schaltstellung tritt gegenüber der vorher beschriebenen Schaltstellung eine Verringerung des Bremsmomentes im Übersynchronbetrieb auf. Wird die Phase 2 durch den Schalter 11 lediglich unterbrochen, ohne den Wicklungsstrang 6 mit dem Nullleiter 4 zu verbinden, was durch die strichlierte Verbindungsleitung der Umschalter 9 und 11 angedeutet wird, so stellt sich eine weitere Reduzierung des Bremsmomentes ein.

Auch die Schalter 9 und 11 können über eine Fernsteuereinrichtung betätigbar sein, wobei es etwa bei polumschaltbaren Motoren möglich ist, für den Anlauf kurzfristig nur einen der beiden Schalter 9 oder 11 in die dargestellte Stellung zum Anschalten der zugehörigen Phasenwicklung an den Nullleiter 4, bei einer Erhöhung der Polzahl durch den Umschalter für den Bremsbetrieb aber beide Schalter 9 und 11 in die in Fig. 4 dargestellte Lage zu stellen.

## Patentansprüche

1. Schaltungsanordnung zur Beeinflussung des Anlauf- und/oder Bremsverhaltens von Drehstrom-Asynchronmaschinen, deren Phasenwicklungen (5, 6, 7) Anschlüsse für die Phasenleiter (1, 2, 3) und einen Nulleiter (4) aufweisen, wobei die Phasenwicklungen in Sternschaltung geschaltet sind und wobei während des Anlaufvorganges der Phasenanschluß einer Phasenwicklung über einen Umschalter (9, 11) mit dem Nulleiter (4) verbunden wird.

2. Schaltungsanordnung zur Beeinflussung des Anlauf- und/oder Bremsverhaltens von Drehstrom-Asynchronmaschinen, mit Phasenwicklungen (5, 6, 7), Phasenleitern (1, 2, 3) und einem Nullleiter (4), wobei die Phasenwicklungen Phasenanschlüsse für die Phasenleiter und den Nulleiter aufweisen, dadurch gekennzeichnet, daß eine Phasenwicklung (5) bleibend an den zugeordneten Phasenleiter (1) und den Nulleiter (4) geschaltet ist, die beiden anderen Phasenwicklungen (6, 7) für den Dauerbetrieb in Reihenschaltung und an den zugeordneten Phasenleitern angeschlossen sind und daß während des Anlauf- und/oder Bremsvorganges der Phasenanschluß einer der beiden in Reihe geschalteten Phasenwicklungen (6, 7) über einen Umschalter (9) mit dem Nulleiter (4) verbunden wird.

3. Schaltungsanordnung nach Anspruch 1,dadurch gekennzeichnet, daß über den Umschalter (9, 11) wahlweise die Phasenanschlüsse von einer (7) oder zwei (6, 7) der drei am Sternpunkt (8) verbundenen Phasenwicklungen (5, 6, 7) an den Nulleiter (4) angeschaltet werden.

4. Schaltungsanordnung nach einem der Ansprüche 1 bis 3, dadurch gekennzeichnet, daß der Umschalter (9, 11) als Teil einer Steueranlage für mehrere Antriebsmotoren einer Förderanlage oder eines Hebezeuges ausgebildet und über eine Fernsteuereinrichtung betätigbar ist, wobei die Fernsteuereinrichtung den Umschalter für den Anlauf des zugeordneten, z. B. als Getriebemotor ausgebildeten Asynchronmotors nur in in der Größenordnung von Sekundenbruchteilen liegenden Zeitspannen in dem die Phasenwicklung (7) bzw. Phasenwicklungen (6, 7) mit dem Nulleiter (4) verbindenden Schaltzustand hält und dann den normalen Einschaltzustand unter Anschaltung sämtlicher Phasenwicklungen (5, 6, 7) an die Phasenanschlüsse (1, 2, 3) ansteuert.

5. Schaltungsanordnung nach einem der Ansprüche 1 bis 4 für eine polumschaltbare Asynchronmaschine, dadurch gekennzeichnet, daß der Umschalter (9, 11) für den Bremsbetrieb gemeinsam mit einem Polschalter für die Änderung der Polzahl betätigbar ist, so daß er die ihm zugeordnete Phasenwicklung (7) bzw. die ihm zugeordneten Phasenwicklungen (6, 7) bei einer Erhöhung der Polzahl beim Bremsbetrieb mit dem Nulleiter (4) verbindet.

## Claims

1. A circuit arrangement for influencing the starting and/or braking behaviour of polyphase asynchronous machines, the phase windings (5, 6, 7) of which comprise connections for the phase conductors (1, 2, 3) and a neutral conductor (4), wherein the phase windings are connected in star and wherein during the starting operation the phase connection of a phase winding is connected to the neutral conductor (4) via a changeover switch (9, 11).

2. A circuit arrangement for influencing the starting and/or braking behaviour of polyphase asynchronous machines, with phase windings (5, 6, 7), phase conductors (1, 2, 3) and a neutral conductor (4), the phase windings comprising phase connections for the phase conductors and the neutral conductor, characterised in that one phase winding (5) is permanently connected to the associated phase conductor (1) and the neutral conductor (4), the other two phase windings (6, 7) for permanent operation are connected in series and to the associated phase conductors and in that during the starting and/or braking process the phase connection of one of the two series-connected phase windings (6, 7) is connected to the neutral conductor (4) via a changeover switch (9).

3. A circuit arrangement according to claim 1, characterised in that the phase connections of one (7) or two (6, 7) of the three phase windings (5, 6, 7) connected to the star point (8) are optionally connected to the neutral conductor (4) via the changeover switch (9, 11).

4. A circuit arrangement according to any one of clams 1 to 3, characterised in that the changeover switch (9, 11) is constructed as part of a control system for a plurality of drive motors of a conveyor plant or a lifting appliance and is adapted to be operated via a remote-control device, which remote control device for the purpose of starting the associated asynchronous motor, for example in the form of a geared motor, holds the changeover switch only for intervals within the order of magnitude of fractions of a second in the state in which it connects the phase winding (7) or phase windings (6, 7) to the neutral conductor (4), and then triggers the normal make condition with all the phase windings (5, 6, 7) connected to the phase connections (1, 2, 3).

5. A circuit arrangement according to any one of claims 1 to 4, for a pole-changing asynchronous machine, characterised in that the changeover switch (9, 11) for brake operation is adapted to be operated jointly with a pole switch for changing the number of poles so that it connects the phase winding (7) or windings (6, 7) associated therewith to the neutral conductor (4) in the event of the number of poles being increased during brake operation.

## Revendications

1. Circuit servant à influer sur le comportement au démarrage et/ou au freinage de moteurs asynchroness à courant triphasé, dont les bobinages de phase (5, 6, 7) présentent des raccordements destinés aux conducteurs de phase (1, 2, 3) et un conducteur neutre (4), les bobinages de phase étant branchés en étoile, pendant le processus de démarrage, le raccordement d'un bobinage de phase étant relié au conducteur neutre (4) par l'intermédiaire d'un commutateur (9, 11).

2. Circuit servant à influer sur le comportement au démarrage et/ou au freinage de moteurs asynchrones à courant triphasé, avec des bobinages de phase (5, 6, 7), des conducteurs de phase (1, 2, 3) et un conducteur neutre (4), les bobinages de phase présentant des raccordements de phase destinés aux conducteurs de phase et au conducteur neutre, caractérisé en ce qu'un bobinage de phase (5) est branché en permanence au conducteur de phase (1) associé et au conducteur neutre (4), les deux autres bobinage de phase (6, 7) destinés au fonctionnement permanent étant raccordés en branchement série et aux conducteurs de phases associés, et en ce que, pendant le processus de démarrage et/ou de freinage, le raccordement de phase de l'un des bobinages de phase (6, 7) pour l'un des deux branché en série est relié au conducteur neutre (4) par l'intermédiaire d'un commutateur (9).

3. Circuit selon la revendication 1, caractérisé en ce que, par l'intermédiaire du commutateur (9, 11), au choix les raccordements de phase sont branchés sur le conducteur neutre (4) par l'un (7) ou par deux (6, 7) des trois bobinages de phase (5, 6, 7) reliés au centre de l'étoile (8).

4. Circuit selon l'une des revendications 1 à 3, caractérisé en ce que le commutateur (9, 11) est réalisé comme partie d'une installation de commande, destinée à plusieurs moteurs d'entraînement d'une installation de transport-manutention ou d'un appareil de levage, et peut être actionné par l'intermédiaire d'un dispositif à commande à distance, le dispositif à commande à distance maintenant le commutateur, pour assurer le démarrage du moteur asynchrone associé, réalisé par exemple sous forme de moto-réducteur, seulement pendant des intervalles de temps de l'ordre de grandeur de fraction de seconde, dans l'état de commutation assurant la liaison entre le bobinage de phase (7) ou les bobinages de phase (6, 7) avec le conducteur neutre (4), puis commandant l'état de mise en service normal avec branchement de l'ensemble des bobinages de phase (5, 6, 7) au raccordement de phase (1, 2, 3).

5. Circuit selon l'une des revendications 1 à 4, pour un moteur asynchrone à commutation de pôles, caractérisé en ce que le commutateur (9, 11) peut être actionné, pour assurer le fonctionnement en freinage, conjointement avec un commutateur de pôles, pour assurer la modification du nombre de pôles, de manière que le bobinage de phase (7) lui étant associé, respectivement, les bobinages de phase (6, 7) lui étant associés, assurent la liaison avec le conducteur neutre (4) en cas d'augmentation du nombre de pôle, en fonctionnement de freinage.
